# EUROPEAN PATENT SPECIFICATION

(11) **EP 4 322 153 B1**
(45) Date of publication and mention of the grant of the patent: **29.10.2025**
(21) Application number: 22190193.7
(22) Date of filing: 12.08.2022
(51) Int. Cl.: G10K 9/22, G10K 11/00, G10K 11/28, G01S 15/86, G01S 15/931, H04R 1/24, G01S 7/521, B60R 19/48, H04R 1/02

(54) **VEHICLE SENSOR DEVICE WITH INTEGRATED ULTRASONIC SENSOR AND MICROPHONE**
FAHRZEUGSENSORVORRICHTUNG MIT INTEGRIERTEM ULTRASCHALLSENSOR UND MIKROFON
DISPOSITIF DE CAPTEUR POUR VÉHICULE AVEC CAPTEUR ULTRASONIQUE ET MICROPHONE INTÉGRÉS

(43) Date of publication of application: 14.02.2024
(73) Proprietor: Harman International Industries, Incorporated, Stamford, CT 06901 (US)
(72) Inventor: DOBOS, Viktor, 6000 Kecskemét (HU); MARTON, Zsolt, 8900 Zalaegerszeg (HU); RIEMANN, Marco Salvatore, 81675 Munich (DE); DITROI-TOTH, Szabolcs Levente, 2600 Vác (HU)
(74) Representative: Rummler, Felix

(56) References cited:
- US-A1- 2018 329 058
- US-A1- 2018 350 391
- US-A1- 2021 377 652

## Description

### Field

The present disclosure relates to a vehicle sensor device.

### Background

External sensors provide an increasing number of functionalities to vehicles, in particular to connected cars and autonomous (driving) vehicles.

For example, sound from the outside of a vehicle originating e.g. from emergency vehicles, pedestrians or events happening in the surrounding of a vehicle may be detected using microphones on the exterior body or surface of a vehicle. As another example, echolocation sensors are usually required for parking assistance systems.

US 2018/329058 A1 describes a sensor device and method for recording a contact event on a vehicle. In particular, the sensor device can detect contact events on a vehicle by measuring impact sounds, while allowing for easy assembly or retrofitting into existing vehicles. The device includes an impact sound sensor that connects to existing signal processing systems in the vehicle, such as those associated with ultrasound sensors used in parking assistance. The ultrasound sensor is arranged in a cylindrical housing and the impact sound sensor is attached to the inside of the housing. The impact sound sensor is positioned to transmit signals from the vehicle's outer shell to the existing signal processing means, reducing the complexity and cost of wiring. This arrangement allows for continuous monitoring of the vehicle's outer shell and economical retrofitting by utilizing the existing infrastructure and central control systems.

Thus, vice versa, the number of sensors mounted in particular to the exterior of a vehicle is increasing. Therefore there is a need for techniques to integrate a plurality of sensors to the exterior of a vehicle.

### Summary

The present invention is defined in the independent claim 1. The dependent claims recite selected optional features. In the following, each of the described methods, apparatuses, examples, and aspects, which do not fully correspond to the invention as defined in the claims is thus not according to the invention and is, as well as the whole following description, present for illustration purposes only or to highlight specific aspects or features of the claims.

A first aspect of the present disclosure relates to a vehicle sensor device. The vehicle sensor device includes an ultrasonic sensor, a microphone arranged next to or behind the ultrasonic sensor and an acoustic channel to the microphone arranged between the microphone and the ultrasonic sensor.

The vehicle sensor device may be installed at the outside of a vehicle, e.g. at the front or rear bumper. A microphone, e.g. used for navigation, voice commands, or noise cancelling purposes, and an ultrasonic sensor, e.g. used for parking assistance, are placed such that the microphone is behind or next to the ultrasonic sensor and such that an acoustic channel towards to microphone is arranged between the microphone and the ultrasonic sensor. Thereby, space and resources may be saved whilst maintaining sensor signal quality. Further, the microphone may be protected against mechanical damage or (air) pollution by the ultrasonic sensor.

In the embodiments, the ultrasonic sensor and the microphone are attached to and/or arranged in a supporting element. In other words: The ultrasonic sensor and the microphone are attached to, i.e. share, a common supporting element. Thereby, the relative arrangement of the microphone and the ultrasonic sensor is fixed and the acoustic channel may be formed and maintained constant. This geometry ensures unhindered functioning of both sensors whilst providing both sensors in a compact design, thereby saving space and resources.

According to another embodiment, the supporting element is at least part of a housing of the microphone, a part of a housing of the vehicle sensor device and/or a part of a vehicle, in particular a bumper of a car, or a conically formed element attachable to the vehicle or the bumper. If the supporting element is part of the housing of the microphone, the vehicle sensor device may form a compact, attachable, space saving module that may be compatible to conventional car bumpers that are configured to hold an ultrasonic sensor. Such bumpers may include an opening into which the vehicle sensor device may be attached. Alternatively or additionally, the supporting element of the vehicle sensor device may be part of the vehicle, e.g. part of the bumper of the vehicle enabling improved compatibility between the geometry of the vehicle sensor device and the vehicle. Alternatively or additionally, the supporting element may be a conically formed element attachable to the vehicle or the bumper. The element may be configured to match the geometry of its counterpart to ensure firm fit between the elements.

In an embodiment, the vehicle sensor device is attachable and/or included in a vehicle, in particular a bumper of a car. Thereby, the microphone and ultrasonic sensor may be fixed to the vehicle in a space saving and weight saving manner. Further, the positions of the sensors may be defined. For example, if the vehicle sensor device, and in particular the ultrasonic sensor, is incorporated into the bumper, a reduced vehicle sensor device size is enabled.

According to another embodiment, the ultrasonic sensor has a front side and a back side and a front side of the microphone faces the backside of the ultrasonic sensor. Thereby, the front side of the microphone, which may include an acoustic port, may face the acoustic channel next to the ultrasonic sensor and between the ultrasonic sensor and the microphone. Acoustic waves may propagate towards the front of the microphone where they may be detected. In this manner, an opening in the vehicle for the ultrasonic sensor may at the same time be used as an opening for the microphone, allowing the acoustic waves to from the outside of the vehicle to be detected by the microphone. In addition, the microphone is protected by the ultrasonic sensor against damage and/or dirt.

In an embodiment, the acoustic channel extends between the supporting element and a front side of the microphone facing the backside of the ultrasonic sensor. The channel enables free transmission of acoustic signal towards the microphone.

In another embodiment, the acoustic channel includes, e.g. is formed by, a gap between the ultrasonic sensor and the supporting element, and/or a gap between the front side of the microphone and the backside of the ultrasonic sensor. The channel enables free transmission of acoustic signal towards the microphone whilst ensuring a small form factor of the vehicle sensor device.

In an embodiment, the microphone includes an acoustic port and wherein the acoustic port faces the back side of the ultrasonic sensor. This enables acoustic signal propagation within the microphone in a compact design, saving space within the vehicle sensor device and thereby allowing for a small size or form factor of the vehicle sensor device.

In another embodiment, the microphone includes an acoustic port and wherein the acoustic port is located next to the ultrasonic sensor. The acoustic port being located next to the ultrasonic sensor may enable, in particular improve, signal propagation towards and within the microphone.

In the embodiments, the ultrasonic sensor is located inside an opening of the supporting element. For example, the ultrasonic sensor may be located inside an opening in a bumper of a car. Alternatively or additionally, the ultrasonic sensor may be located inside an opening of a supporting element forming part of the housing of the microphone or of the vehicle sensor device. The opening may act as a resonator of the ultrasonic sensor.

In the embodiments the opening of the supporting element is conically shaped and/or wherein an inner diameter of the opening decreases towards the microphone, in particular along the acoustic channel. The conical shape of the opening enables a directional acoustic signal toward the inner of the housing and thereby improved signal propagation towards the microphone. Additionally, the conical shape, in particular with the ultrasonic sensor being placed concentrically inside the opening, allows to shield the microphone, in particular the membrane of the microphone, against mechanical stress such as produced by water jet streams or particles. Moreover, the shape of the opening facilitates cleaning of the opening and the ultrasonic sensor located therein.

According to an embodiment, the microphone includes a housing. The housing may be attached to or include the supporting element.

In an embodiment, the housing includes a conically and/or cylindrically shaped cavity forming the acoustic port. The shape of the cavity enables acoustic signal transmission toward the membrane and within the microphone.

According to another embodiment, the housing is located at and/or attached to the supporting element and faces an opening, in particular the above mentioned opening. The position of the housing enables a compact design. For example, the supporting element, in particular the bumper of a car, may hold the housing at a fixed position. The orientation of the housing facing the opening of the supporting element allows for unhindered acoustic signal transmission towards the microphone.

### Brief description of the drawings

The features, objects, and advantages of the present disclosure will become more apparent from the detailed description set forth below when taken in conjunction with the drawings in which like reference numerals refer to similar elements.
**Figure 1** depicts a schematic of an vehicle sensor device in a cross sectional view according to one or more embodiments;
**Figure 2** depicts a schematic of the vehicle sensor device in a tilted three-dimensional view according to one or more embodiments;
**Figure 3** depicts a schematic of the vehicle sensor device attached to a bumper of a car in a cross sectional view according to one or more embodiments;
**Figure 4** depicts a schematic of an acoustic path inside the vehicle sensor device in a cross sectional view according to one or more embodiments;
**Figure 5** depicts a schematic of the vehicle sensor device attached to a bumper of a car in a tilted three-dimensional view according to one or more embodiments.

### Detailed description of the preferred embodiments

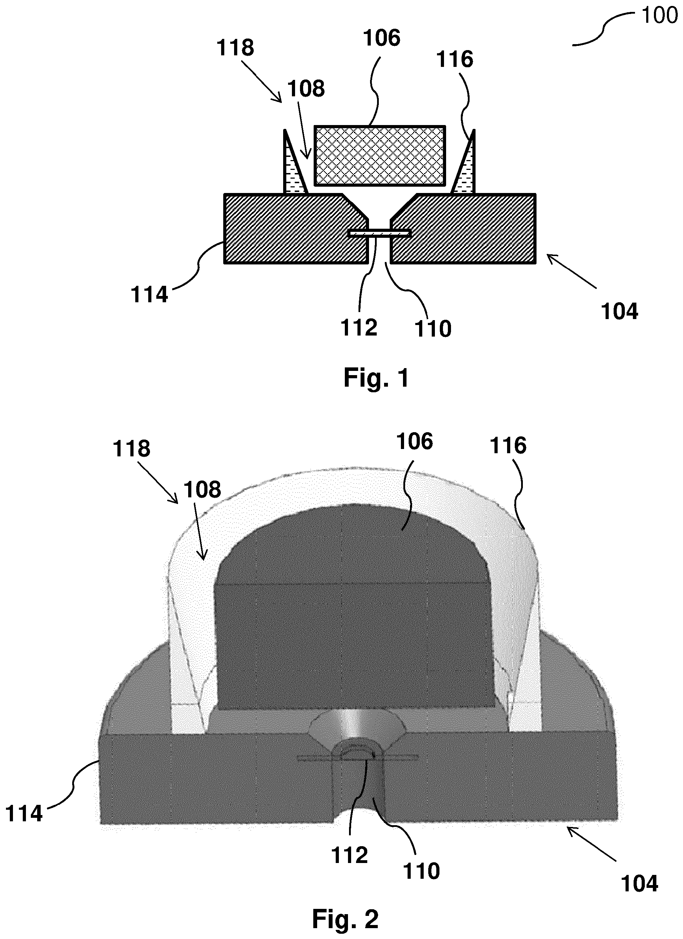

**Figures 1 and 2** depict a schematic of a vehicle sensor device 100. The vehicle sensor device 100 includes a microphone 104, an ultrasonic sensor 106 and a supporting element 116.

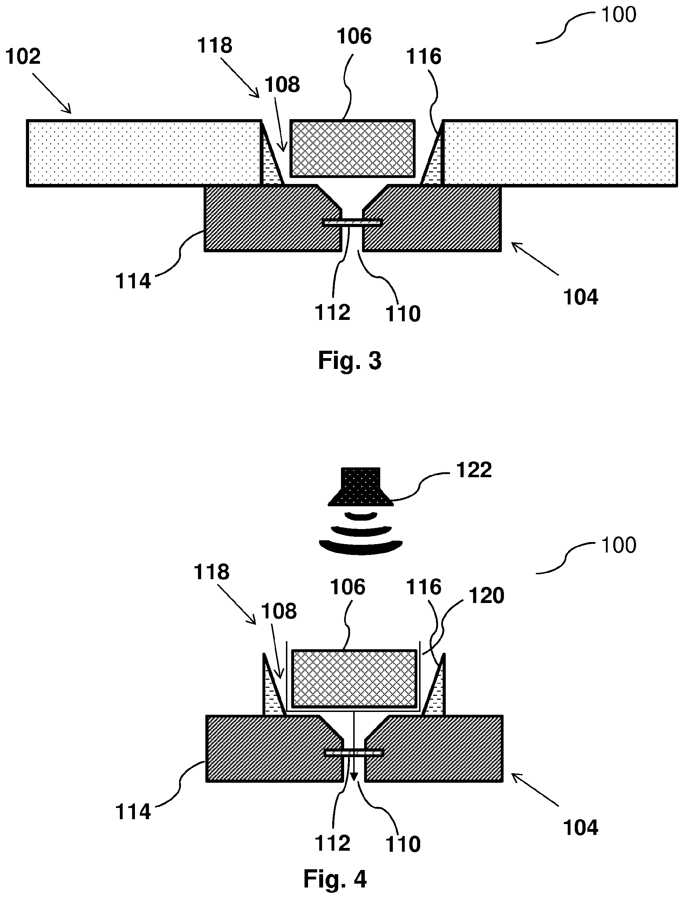

The supporting element 116 may include, e.g. be made of a metallic, polymeric or composite material. The supporting element 116 may be detachably mountable to the exterior of a vehicle or may be part of a vehicle. For example, the supporting element 116 may be mountable to a front and/or a rear bumper 102 of a car, as shown in Figure 3. The illustrated bumper 102 represents a part of a vehicle 102, in particular a part of a bumper 102, to which the vehicle sensor device 100 is attached, or in which the vehicle sensor device 100 is included. In another embodiment, the part of the vehicle 102 is a different part of a vehicle.

Additionally, or alternatively, the part of the vehicle 102 may include the supporting element 116.

The part of the vehicle 102 and/or the supporting element 116 may represent or include a resonator. The resonator may be a resonator for the ultrasonic sensor 106 and attenuate air conducted sound waves, thereby helping the sensor to pick up more mechanic vibration for the same acoustic stimulus.

The ultrasonic sensor 106 may be a disk shaped sensor made of crystalline or ceramic piezoelectric material. The ultrasonic sensor 106 may include, in particular consists of an echolocation sensor that is attached to a rigid cylindrically shaped resonator.

The ultrasonic sensor 106 is mounted at as few places as possible inside the opening 118 of the supporting element 116 to leave a gap forming the acoustic channel 108. For example, the ultrasonic sensor 106 is pointwise fastened (not shown) to the supporting element 116 and/or to the microphone 104. The opening 118 is conically shaped with a decreasing diameter towards the microphone 104.

The microphone 104 may be a MEMS microphone. The microphone 104 may be single microphone or a microphone array. The microphone 104 may be an analog to digital, A2B, microphone. The microphone 104 may have a bottom port and/or a top port. The microphone 104 may be a uni-directional or omni-directional microphone. The microphone 104 includes a housing 114 with a cavity forming an acoustic port 110 and a membrane or diaphragm 112. The acoustic port 110 may be conically and/or cylindrically shaped. The microphone 104 is arranged facing, with its front side, the back side of the ultrasonic sensor 106. The acoustic port 110 faces the back side of the ultrasonic sensor 106. Alternatively, the acoustic port 110 may be located next to the ultrasonic sensor 106, in particular at least in part next to the opening 118.

The housing 114 of the microphone 104 is attached to the supporting element 116 or part of the supporting element 116. Alternatively, the housing 114 of the microphone 104 may be attached to the part of the vehicle 102, e.g. the bumper 102 of a car.

**Figure 4** depicts an acoustic path 120 from an acoustic source 122 through an acoustic channel 108 within the supporting element 116, in particular between the ultrasonic sensor 106 and the microphone 104, to the microphone 104. The acoustic channel 108 extends between the supporting element 116 and the front side of the microphone 104 facing the backside of the ultrasonic sensor 106. The acoustic channel 108 is formed by a gap between the ultrasonic sensor 106 and the supporting element 116 and a gap between the front side of the microphone 104 and the backside of the ultrasonic sensor 106. The acoustic path 120 propagates from the acoustic channel 108 to the acoustic port 110 of the microphone 104.

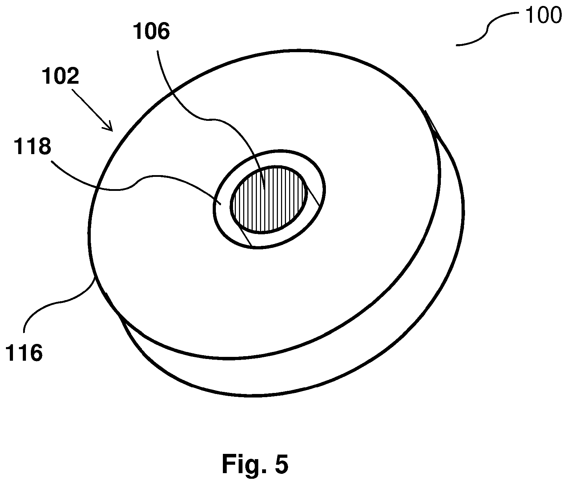

**Figure 5** depicts a tilted front view of the ultrasonic sensor 106 inside the opening 118 of the supporting element 116. In this example, the supporting element 116 is formed by a part of a vehicle 102, e.g. a bumper 102 of a car. A gap is formed between the ultrasonic sensor 106 and the part of the vehicle 102. The ultrasonic sensor 106 is attached to the part of the vehicle 102 such that the gap remains at least substantially open, in particular at as many places as possible, allowing for acoustic waves to enter the acoustic channel 108 and to reach the microphone 104 arranged behind the ultrasonic sensor 106. Further, the ultrasonic sensor 106 is attached to the part of the vehicle 102 such that the resonator included in the supporting element 116 or the part of the vehicle 102 is not hindered.

### Reference signs

- 100: Vehicle sensor device
- 102: Part of a vehicle
- 104: Microphone
- 106: Ultrasonic sensor
- 108: Acoustic channel
- 110: Acoustic port
- 112: Membrane
- 114: Housing of the microphone
- 116: Supporting element
- 118: Opening
- 120: Acoustic path
- 122: Acoustic source

## Claims

1. A vehicle sensor device (100) comprising:
an ultrasonic sensor (106);
a microphone (104) arranged next to or behind the ultrasonic sensor (106) with respect to the direction of an incoming acoustic signal; and
an acoustic channel (108) to the microphone arranged between the microphone (104) and the ultrasonic sensor (106);
a supporting element (102, 114, 116);
wherein the ultrasonic sensor (106) and the microphone (104) are attached to and/or arranged in the supporting element (102, 114, 116);
the sensor device being **characterized in that**:
the ultrasonic sensor (106) is located inside an opening (118) of the supporting element (102, 114, 116); and
wherein the opening (118) of the supporting element (102, 114, 116) is conically shaped.

2. The vehicle sensor device (100) of claim 1, wherein the supporting element (102, 114, 116) is at least a part of a housing of the microphone (104), a part of a housing of the vehicle sensor device (100) and/or a part of a vehicle (102), in particular a bumper of a car, or a conically formed element attachable to the vehicle (102) or the bumper.

3. The vehicle sensor device (100) of any preceding claim, wherein the vehicle sensor device (100) is attachable and/or comprised by a vehicle (102), in particular a bumper of a car.

4. The vehicle sensor device (100) of any preceding claim, wherein the ultrasonic sensor (106) has a front side and a back side with respect to the direction of an incoming acoustic signal, wherein a front side of the microphone (104) faces the back side of the ultrasonic sensor (106).

5. The vehicle sensor device (100) of any preceding claim, wherein the acoustic channel (108) extends between the supporting element (102, 114, 116) and a front side of the microphone (104) facing the backside of the ultrasonic sensor (106) respect to the direction of an incoming acoustic signal.

6. The vehicle sensor device (100) of any preceding claim, wherein the acoustic channel (108) includes a gap between the ultrasonic sensor (106) and the supporting element (102, 114, 116), and/or a gap between the front side of the microphone (104) and the backside of the ultrasonic sensor (106) with respect to the direction of an incoming acoustic signal.

7. The vehicle sensor device (100) of any preceding claim, wherein the microphone (104) comprises an acoustic port (110) and wherein the acoustic port (110) faces the back side of the ultrasonic sensor (106) with respect to the direction of an incoming acoustic signal.

8. The vehicle sensor device (100) of any preceding claim, wherein the microphone (104) comprises an acoustic port (110) and wherein the acoustic port (100) is located next to the ultrasonic sensor (106).

9. The vehicle sensor device (100) of any preceding claim, wherein an inner diameter of the opening (118) decreases towards the microphone (104), in particular along the acoustic channel (108).

10. The vehicle sensor device (100) of any preceding claim, wherein the microphone (104) comprises a housing (114).

11. The vehicle sensor device (100) of claims 8 and 10, wherein the housing (114) comprises a conically and/or cylindrically shaped cavity forming the acoustic port (110).

12. The vehicle sensor device (100) of claim 10 or 11, wherein the housing (114) is located at and/or attached to the supporting element (102, 114, 116), and faces an opening, in particular the opening of claim 10 or 11.

## Patentansprüche

1. Fahrzeugsensorvorrichtung (100), umfassend:
einen Ultraschallsensor (106);
ein Mikrofon (104), das in Bezug auf die Richtung eines eingehenden akustischen Signals neben oder hinter dem Ultraschallsensor (106) angeordnet ist; und
einen akustischen Kanal (108) zu dem Mikrofon, der zwischen dem Mikrofon (104) und dem Ultraschallsensor (106) angeordnet ist;
ein Trägerelement (102, 114, 116);
wobei der Ultraschallsensor (106) und das Mikrofon (104) an dem Trägerelement (102, 114, 116) befestigt und/oder darin angeordnet sind;
die Sensorvorrichtung **dadurch gekennzeichnet ist, dass**:
sich der Ultraschallsensor (106) innerhalb einer Öffnung (118) des Trägerelements (102, 114, 116) befindet; und
wobei die Öffnung (118) des Trägerelements (102, 114, 116) konisch geformt ist.

2. Fahrzeugsensorvorrichtung (100) nach Anspruch 1, wobei das Trägerelement (102, 114, 116) mindestens ein Teil eines Gehäuses des Mikrofons (104), ein Teil eines Gehäuses der Fahrzeugsensorvorrichtung (100) und/oder ein Teil eines Fahrzeugs (102), insbesondere ein Stoßfänger eines Autos, oder ein konisch geformtes, an dem Fahrzeug (102) oder dem Stoßfänger anbringbares Element ist.

3. Fahrzeugsensorvorrichtung (100) nach einem der vorhergehenden Ansprüche, wobei die Fahrzeugsensorvorrichtung (100) an einem Fahrzeug (102), insbesondere einem Stoßfänger eines Pkws, anbringbar und/oder darin umfasst ist.

4. Fahrzeugsensorvorrichtung (100) nach einem der vorhergehenden Ansprüche, wobei der Ultraschallsensor (106) eine Vorderseite und eine Rückseite in Bezug auf die Richtung eines eingehenden akustischen Signals aufweist, wobei eine Vorderseite des Mikrofons (104) der Rückseite des Ultraschallsensors (106) zugewandt ist.

5. Fahrzeugsensorvorrichtung (100) nach einem der vorhergehenden Ansprüche, wobei sich der akustische Kanal (108) zwischen dem Trägerelement (102, 114, 116) und einer Vorderseite des Mikrofons (104) erstreckt, die der Rückseite des Ultraschallsensors (106) in Bezug auf die Richtung eines eingehenden akustischen Signals zugewandt ist.

6. Fahrzeugsensorvorrichtung (100) nach einem der vorhergehenden Ansprüche, wobei der akustische Kanal (108) einen Spalt zwischen dem Ultraschallsensor (106) und dem Trägerelement (102, 114, 116) und/oder einen Spalt zwischen der Vorderseite des Mikrofons (104) und der Rückseite des Ultraschallsensors (106) in Bezug auf die Richtung eines eingehenden akustischen Signals beinhaltet.

7. Fahrzeugsensorvorrichtung (100) nach einem der vorhergehenden Ansprüche, wobei das Mikrofon (104) einen akustischen Eingang (110) umfasst und wobei der akustische Eingang (110) in Bezug auf die Richtung eines eingehenden akustischen Signals der Rückseite des Ultraschallsensors (106) zugewandt ist.

8. Fahrzeugsensorvorrichtung (100) nach einem der vorhergehenden Ansprüche, wobei das Mikrofon (104) einen akustischen Eingang (110) umfasst und wobei sich der akustische Eingang (100) neben dem Ultraschallsensor (106) befindet.

9. Fahrzeugsensorvorrichtung (100) nach einem der vorhergehenden Ansprüche, wobei ein Innendurchmesser der Öffnung (118) zu dem Mikrofon (104) hin abnimmt, insbesondere entlang des akustischen Kanals (108).

10. Fahrzeugsensorvorrichtung (100) nach einem der vorhergehenden Ansprüche, wobei das Mikrofon (104) ein Gehäuse (114) umfasst.

11. Fahrzeugsensorvorrichtung (100) nach einem der Ansprüche 8 und 10, wobei das Gehäuse (114) einen konisch und/oder zylindrisch geformten Hohlraum umfasst, der den akustischen Eingang (110) bildet.

12. Fahrzeugsensorvorrichtung (100) nach Anspruch 10 oder 11, wobei sich das Gehäuse (114) an dem Trägerelement (102, 114, 116) befindet und/oder daran befestigt ist und einer Öffnung, insbesondere der Öffnung nach Anspruch 10 oder 11, zugewandt ist.

## Revendications

1. Dispositif de capteur pour véhicule (100) comprenant :
un capteur ultrasonique (106) ;
un microphone (104) agencé à côté du capteur ultrasonique (106) ou derrière celui-ci par rapport à la direction d'un signal acoustique entrant ; et
un canal acoustique (108) vers le microphone agencé entre le microphone (104) et le capteur ultrasonique (106) ;
un élément de support (102, 114, 116) ;
dans lequel le capteur ultrasonique (106) et le microphone (104) sont fixés à et/ou agencés dans l'élément de support (102, 114, 116) ;
le dispositif de capteur étant **caractérisé en ce que** :
le capteur ultrasonique (106) est situé à l'intérieur d'une ouverture (118) de l'élément de support (102, 114, 116) ; et
dans lequel l'ouverture (118) de l'élément de support (102, 114, 116) est de forme conique.

2. Dispositif de capteur pour véhicule (100) selon la revendication 1, dans lequel l'élément de support (102, 114, 116) est au moins une partie d'un boîtier du microphone (104), une partie d'un boîtier du dispositif de capteur pour véhicule (100) et/ou une partie d'un véhicule (102), en particulier un pare-chocs d'une voiture, ou un élément de forme conique pouvant être fixé au véhicule (102) ou au pare-chocs.

3. Dispositif de capteur pour véhicule (100) selon une quelconque revendication précédente, dans lequel le dispositif de capteur pour véhicule (100) peut être fixé à et/ou compris dans un véhicule (102), en particulier un pare-chocs d'une voiture.

4. Dispositif de capteur pour véhicule (100) selon une quelconque revendication précédente, dans lequel le capteur ultrasonique (106) présente un côté avant et un côté arrière par rapport à la direction d'un signal acoustique entrant, dans lequel un côté avant du microphone (104) fait face au côté arrière du capteur ultrasonique (106).

5. Dispositif de capteur pour véhicule (100) selon une quelconque revendication précédente, dans lequel le canal acoustique (108) se prolonge entre l'élément de support (102, 114, 116) et un côté avant du microphone (104) faisant face au côté arrière du capteur ultrasonique (106) par rapport à la direction d'un signal acoustique entrant.

6. Dispositif de capteur pour véhicule (100) selon une quelconque revendication précédente, dans lequel le canal acoustique (108) comporte un espace entre le capteur ultrasonique (106) et l'élément de support (102, 114, 116) et/ou un espace entre le côté avant du microphone (104) et le côté arrière du capteur ultrasonique (106) par rapport à la direction d'un signal acoustique entrant.

7. Dispositif de capteur pour véhicule (100) selon une quelconque revendication précédente, dans lequel le microphone (104) comprend un orifice acoustique (110) et dans lequel l'orifice acoustique (110) fait face au côté arrière du capteur ultrasonique (106) par rapport à la direction d'un signal acoustique entrant.

8. Dispositif de capteur pour véhicule (100) selon une quelconque revendication précédente, dans lequel le microphone (104) comprend un orifice acoustique (110) et dans lequel l'orifice acoustique (100) est situé à proximité du capteur ultrasonique (106).

9. Dispositif de capteur pour véhicule (100) selon une quelconque revendication précédente, dans lequel un diamètre intérieur de l'ouverture (118) diminue vers le microphone (104), en particulier le long du canal acoustique (108).

10. Dispositif de capteur pour véhicule (100) selon une quelconque revendication précédente, dans lequel le microphone (104) comprend un boîtier (114).

11. Dispositif de capteur pour véhicule (100) selon les revendications 8 et 10, dans lequel le boîtier (114) comprend une cavité de forme conique et/ou cylindrique formant l'orifice acoustique (110).

12. Dispositif de capteur pour véhicule (100) selon la revendication 10 ou 11, dans lequel le boîtier (114) est situé au niveau de et/ou fixé à l'élément de support (102, 114, 116) et fait face à une ouverture, en particulier l'ouverture selon la revendication 10 ou 11.
